(19) Europäisches Patentamt
European Patent Office
Office européen des brevets

(11) **EP 4 518 304 B1**

(12) **EUROPEAN PATENT SPECIFICATION**

(45) Date of publication and mention
of the grant of the patent:
**13.05.2026 Bulletin 2026/20**

(21) Application number: **24195663.0**

(22) Date of filing: **21.08.2024**

(51) International Patent Classification (IPC):
*H04N 1/00* (2006.01)    *B41F 33/00* (2006.01)
*G06F 3/12* (2006.01)    *G06T 7/00* (2017.01)

(52) Cooperative Patent Classification (CPC):
**H04N 1/00005; B41F 33/0036; B41F 33/0081;
B41F 33/02; B41F 33/16; G06F 3/1208;
G06F 3/1259; G06F 3/1285; G06T 7/0002;
G06T 7/0004; G06T 7/001; H04N 1/00015;
B41J 2203/01; B41P 2233/10; B41P 2233/50;**
(Cont.)

(54) **INSPECTION APPARATUS AND INSPECTION SYSTEM**

INSPEKTIONSVORRICHTUNG UND INSPEKTIONSSYSTEM

APPAREIL D'INSPECTION ET SYSTÈME D'INSPECTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.08.2023 JP 2023138699**

(43) Date of publication of application:
**05.03.2025 Bulletin 2025/10**

(73) Proprietor: **CANON KABUSHIKI KAISHA**
**Tokyo 146-8501 (JP)**

(72) Inventor: **ICHIHASHI, Yukichika**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(56) References cited:
**JP-A- 2011 158 421    JP-A- 2021 009 097**

(52) Cooperative Patent Classification (CPC): (Cont.)
    B41P 2233/51; B41P 2233/52; G06T 2207/30144

(52) Cooperative Patent Classification (CPC): (Cont.)
    B41P 2233/51; B41P 2233/52; G06T 2207/30144

**Description**

BACKGROUND OF THE INVENTION

Field of the Invention

The present disclosure relates to an inspection apparatus and an inspection system.

Description of the Related Art

Digital printers using an electrophotographic technology, an inkjet technology, or the like, which is called Print on Demand, are commonly used as production equipment alternative to offset print mainly in printing industries. The digital printers are required to inherit high quality of offset printers to efficiently produce prints. In order to achieve both guarantee of print quality and productivity, inspection apparatuses that inspect the image quality of prints during printing have been proposed in recent years.

In the inspection apparatus, an image produced by scanning a print in advance or a raster image processor (RIP) image during printing is generated as a sample image and an image produced by scanning the print during printing is generated as an inspection image.

In the inspection, the generated sample image of a page is compared with the generated inspection image of the same page. If any difference exists between the sample image and the inspection image, notification of the difference to a user interface, exclusion of a page of a print including any defect as a waste sheet, marking of the defect, and so on are performed.

In the inspection apparatus, an exclusion-making device is frequently provided on a conveyance path about 1,000 mm behind the portion where the inspection image is scanned. Accordingly, it is necessary to shorten the inspection time by the inspection apparatus to perform real-time inspection in which any defect detected by the inspection apparatus is notified before the print passes through the exclusion-making device.

In the case of roll label printing using continuous paper, a method is used in which detection marks called eye marks are added to images corresponding to one page and the pattern is separated using the detection marks as trigger signals to perform a detect inspection for each eye mark (refer to Japanese Patent Laid-Open Publication No. 2011-158421).

It is necessary to print multiple copies to inspect all the copies in the inspection. It is necessary for an inspection apparatus to perform image comparison of all the multiple prints with a defect inspection program and to determine whether any defect is detected for each page. Accordingly, it is necessary for a resource (for example, a memory or a graphics processing unit (GPU)) used for the real-time inspection to finish the inspection of the previous page before the inspection of the next page is started.

SUMMARY OF THE INVENTION

The present invention in its first aspect provides an inspection apparatus as specified in claim 1. Optional features are specified in claims 2 to 8.

The present invention in its second aspect provides an inspection system as specified in claim 9.

Further features of the present invention will become apparent from the following description of embodiments with reference to the attached drawings.

BRIEF DESCRIPTION OF THE DRAWINGS

Fig. 1 is an example of a schematic diagram illustrating the entire configuration for describing embodiments.

Fig. 2 is an example of a schematic diagram illustrating the circuit configuration of each apparatus for describing the embodiments.

Fig. 3A to Fig. 3C are examples of diagrams illustrating the respective programs for describing the embodiments.

Fig. 4 is an example of a sequence chart for describing registration of a print sample image in a first embodiment.

Fig. 5 is an example of a flowchart for describing Step S1005 in the first embodiment.

Fig. 6A to Fig. 6F are examples of operation windows and an inspection result window for describing the embodiments.

Fig. 7 is an example of a flowchart for describing Step S1008 in the first embodiment.

Fig. 8A to Fig. 8J are examples of schematic diagrams for describing the print sample image in the embodiments.

Fig. 9 is an example of a sequence chart for describing an inspection process in the first embodiment.
Fig. 10 is an example of a schematic diagram for describing a scanned image in Step S5003.
Fig. 11 is an example of a flowchart for describing Step S1005 in a second embodiment.
Fig. 12 is an example of a flowchart for describing Step S1005 in a third embodiment.
Fig. 13 is an example of a flowchart for describing Step S1008 in the third embodiment.

DESCRIPTION OF THE EMBODIMENTS

Embodiments of the present disclosure will herein be described with reference to the drawings.

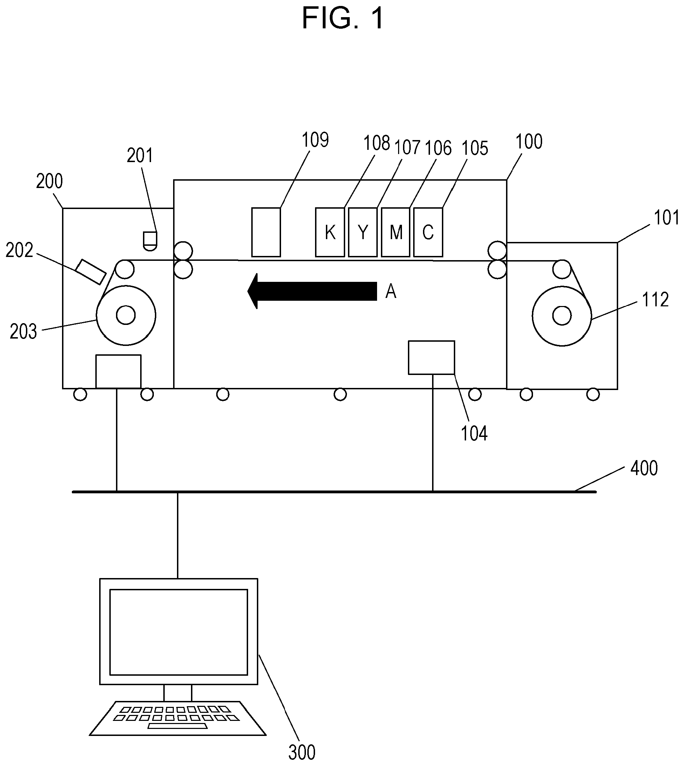

Fig. 1 is a diagram illustrating the entire configuration of an image inspection system (a print inspection system) for describing the embodiments. In the following description, a print apparatus 100 may be called an image formation apparatus, a printer, a multifunction apparatus, or a multifunction peripheral.

A personal computer (PC) 300 is connected to the print apparatus 100 via a local area network (LAN) 400. In addition, an inspection apparatus 200 is connected to the LAN 400. The print apparatus 100 is connected to the inspection apparatus 200 so that a medium is capable of being directly conveyed from the print apparatus 100 to the inspection apparatus 200. The print apparatus 100 and the inspection apparatus 200 may be collectively called a print inspection apparatus.

The print apparatus 100 is connected to a paper feeding unit 101 and is controlled by a control unit 104 for controlling the entire print apparatus 100.

The control unit 104 has a function to connect the print apparatus 100 to the LAN 400, and the print apparatus 100 is capable of being connected to the LAN 400.

Roll paper is capable of being loaded in the paper feeding unit 101. The roll paper is wound around a roll paper winding unit 112.

The roll paper is one of recording media in the present disclosure and is applicable to media of various shapes, such as continuous form and cut paper. In addition, the roll paper is applicable to various printable materials, such as cloth, a plastic material, and a metallic material.

The recording medium fed from the paper feeding unit 101 is conveyed in the direction of an arrow A. Images are formed on an image formation station (cyan) 105, an image formation station (magenta) 106, an image formation station (yellow) 107, and an image formation station (black) 108 during conveyance and ink or toner is transferred to the recording medium. The method of forming an image on the recording medium is not limited in the embodiments and, for example, an electrophotographic method, an offset method, or an inkjet method may be adopted. Furthermore, the order of the colors may be altered.

A fixing system 109 fixes a color material, such as the toner or the ink, to the recording medium. The fixing method is varied depending on the image formation method. For example, a thermal compression bonding method or a drying method may be adopted.

A reading sensor 201 of the inspection apparatus 200 is arranged downstream of the fixing system 109.

The reading sensor 201 is a device for reading an image formed on the recording medium as image data. For example, the image is converted into the image data with an image reading sensor using a device, such as a complementary metal oxide semiconductor (CMOS) or a charge coupled device (CCD). A line sensor of the size in a main scanning direction of the recording medium may be used as the reading sensor 201 or an area sensor may be used as the reading sensor 201. The reading sensor 201 is required to have a configuration to convert the entire recording medium to be conveyed into the image data of high resolution, for example, 300 dpi. A marking unit 202 and a recording paper winding unit 203 are arranged in the inspection apparatus 200. The marking unit 202 is capable of adding a mark to an arbitrary location of recording paper. The marking unit 202 is used to add a mark to a portion determined not to be appropriate by the inspection apparatus.

The PC 300 is connected to the print apparatus 100 via the LAN 400. The PC 300 is used for printing in the print apparatus 100.

Although the PC 300 is used for description in the embodiments, the PC 300 is not limitedly used. Another device or program for realizing the processing is applicable.

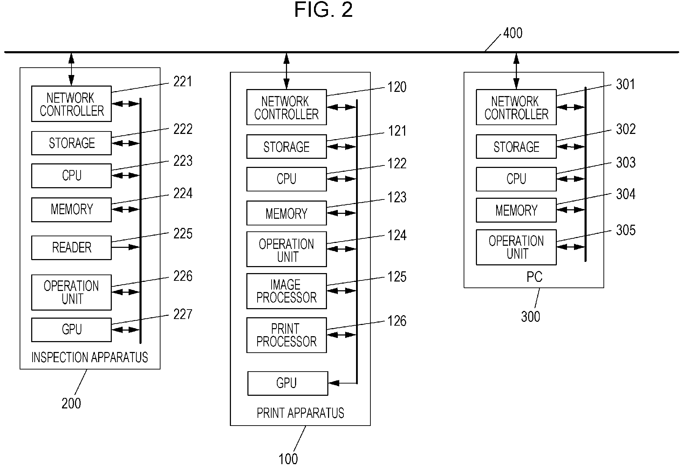

Fig. 2 illustrates the circuit configuration of each apparatus.

The print apparatus 100 is connected to the LAN 400 via a network controller 120. The processing performed by the print apparatus 100 is realized by a central processing unit (CPU) 122 that reads out programs stored in a storage 121 into a memory 123 and executes the programs.

The print apparatus 100 includes an operation unit 124 and is capable of display on a screen of the operation unit 124 to accept an input operation from the outside. An image processor 125 converts electronic image data (for example, CIE-sRGB multivalued image data) into electronic image data for printing (for example, a CMYK halftone image). In addition, the electronic image data for printing is transferred to a print processor 126 and is transferred to the recording paper fed from the paper feeding unit 101 using the image formation stations 105 to 108 for printing.

The inspection apparatus 200 is connected to the LAN 400 via a network controller 221. The processing performed by the inspection apparatus 200 is realized by a CPU 223 that reads out programs stored in a storage 222 into a memory 224 and executes the programs. In addition, the data on the recording paper is converted into electronic image data (for example, RGB multivalued image data) using a reader 225 connected to the reading sensor 201. An operation unit 226 functions as a display unit that displays an inspection settings window described below and accepts an input by a user. The window displayed on the display unit is controlled by the CPU 223 and the CPU 223 may be referred to as a display control unit in the embodiments. The inspection apparatus 200 further includes a GPU 227. Increasing the speed of the inspection enables an inspection time to be made shorter than a printing time for each page.

The PC 300 is connected to the LAN 400 via a network controller 301 for issuing a print instruction to the print apparatus 100. The processing performed by the PC 300 is realized by a CPU 303 that reads out programs stored in a storage 302 into a memory 304 and executes the programs. An operation unit 305 is connected to a display

(not illustrated) and is capable of displaying a window. In addition, the operation unit 305 is connected to a mouse and/or a keyboard and is capable of manipulating the programs.

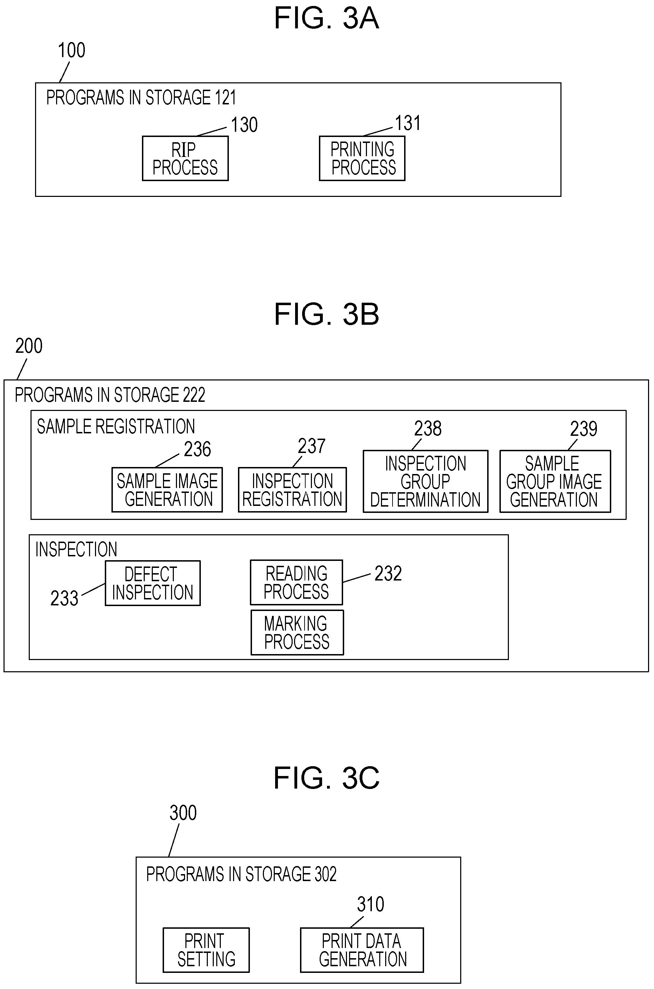

Fig. 3A to Fig. 3C illustrate programs stored in storage 121, the storage 222, and the storage 302. Fig. 3A illustrates programs stored in the storage 121 in the print apparatus 100. Fig. 3B illustrates programs stored in the storage 222 in the inspection apparatus 200. Fig. 3C illustrates programs stored in the storage 302 in the PC 300. The respective programs illustrated in Figs. 3A to 3C are described in detail below.

The print apparatus 100, the inspection apparatus 200, and the PC 300 include the operation unit 124, the operation unit 226, and the operation unit 305, respectively. The CPU 122, the CPU 223, and the CPU 303 have a function to generate Hyper Terminal Markup Language (HTML) for the display on the respective windows using the programs.

Accordingly, the display and the operation on the respective operation units are available using Hyper Text Transfer Protocol (HTTP). The device that accepts the display and the operation and the display are not limited in the present disclosure.

First embodiment

Registration of print sample

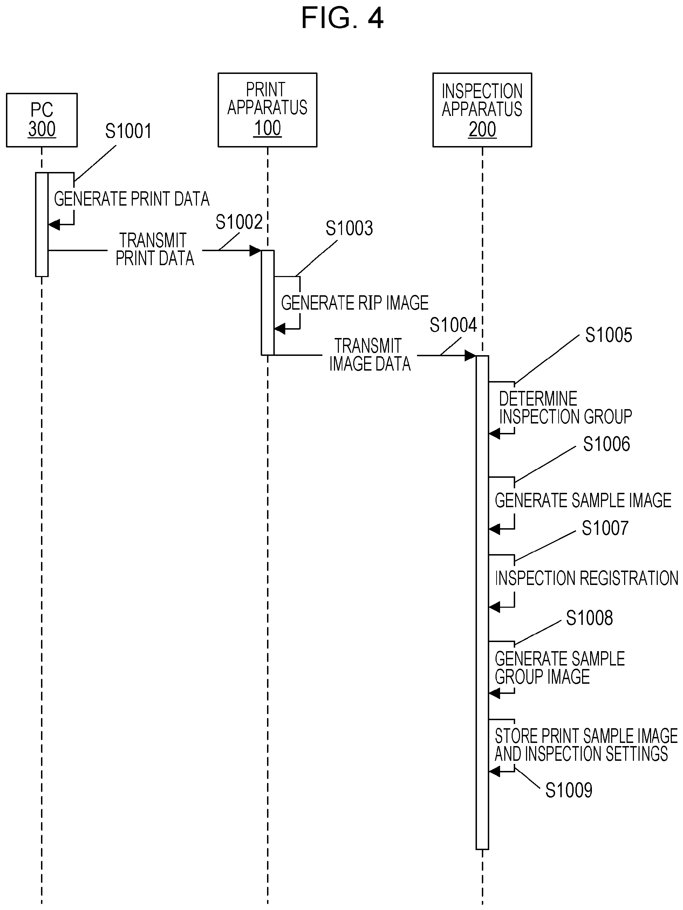

A method of registering a print sample for inspection will now be described using a sequence chart in Fig. 4.

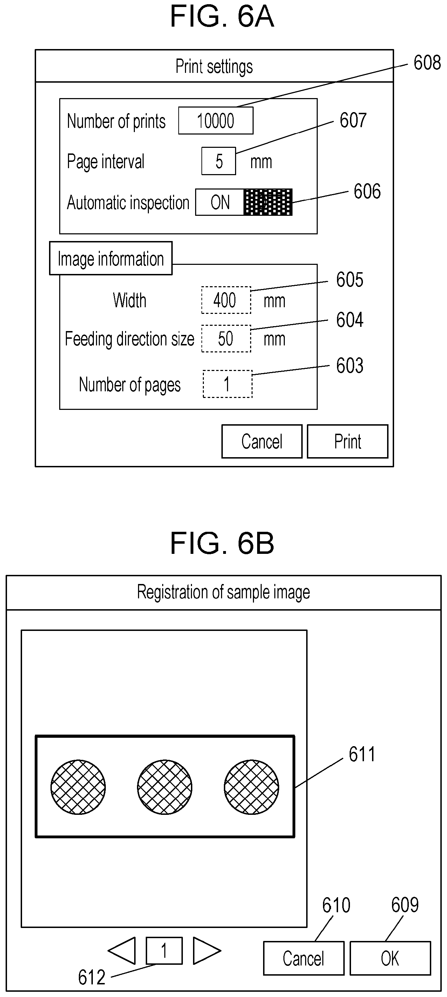

Referring to Fig. 4, in Step S1001, upon reception of a print instruction from the operation unit 305, the CPU 303 in the PC 300 executes a print data generation program 310 to generate print data. The print data generation program 310 displays a window, an example of which is illustrated in Fig. 6A in the operation unit 305 of the PC 300. Width 605 and Feeding direction size 604 of an image to be printed, Number-of-pages 603, Number-of-prints 608, Page interval 607, and Automatic inspection switch 606 are capable of being set on the window in Fig. 6A. The print instruction includes information input on the window in Fig. 6A. The Automatic inspection switch 606 is described to be constantly switched on in a first embodiment.

The print data generated here is composed of an image of Joint Photographic Experts Group (JPEG) or Tag Image File Format (TIFF), text data, font information used for the text data, graphics drawing data, and so on.

In Step S1002, the CPU 303 in the PC 300 transmits the print data generated in Step S1001 to the print apparatus 100 via the LAN 400.

In Step S1003, the CPU 122 in the print apparatus 100 executes a RIP process program 130 to perform a RIP process to the received print data, thus generating the image data.

The RIP process is a raster image processor process and means a process to generate the image data from the received print data. Specifically, Page Description Language (PDL), which is character-image data, is interpreted to be converted into a raster image. The image data generated here is image data composed of color information, such as CMYK. In the case of the print data of multiple pages, the image data for all the pages is generated.

In Step S1004, the CPU 122 in the print apparatus 100 transmits the image data generated in Step S1003 to the inspection apparatus 200 via the LAN 400. The image transmitted in Step S1004 is referred to as a first image in the first embodiment.

In Step S1005, the CPU 223 in the inspection apparatus 200 performs an inspection group determination process 238. In the present disclosure, documents of small sizes are put together into groups to intend to decrease the number of inspections with respect to the number of print pages. Decreasing the number of inspections in response to the number of print pages in each group, which is output through the inspection group determination process 238, enables the number of times of initial setup or the like, which is performed for each inspection, to be decreased.

In the inspection group determination process 238, the number of pages or the number of prints for which the inspection is performed in one inspection process (hereinafter referred to as a group) of the image generated by the RIP process 130 is determined. In addition, the groups for which the numbers of pages to be inspected are set include the groups of two kinds: a non-final group and a final group, which are varied depending on the number of pages and the number of prints to be printed. The inspection group determination process will be described in detail below. Here, the number of pages of group inspection of the non-final group is denoted by M and the number of pages of group inspection of the final group is denoted by N.

In Step S 1006, the CPU 223 in the inspection apparatus 200 performs a sample image generation process 236. Specifically, a print sample image for image inspection is generated based on the image data received in Step S1004 and the generated print sample image is displayed in the operation unit 226. For example, when the image data is the CMYK image, the image data is converted into the RGB image data through a color conversion process using an International Color Consortium (ICC) profile stored in the storage 222 in advance to generate the print sample image. Fig. 6B is an example of an approval window of print sample image generation, which is displayed in the operation unit 226. Upon detection of depression of an OK button 609 with the operation unit 226, the CPU 223 goes to Step S1007. In contrast, upon detection of depression of a Cancel button 610 with the operation unit 226, the CPU 223 stops the processing and terminates the print sample image generation. The window in Fig. 6B has an image display portion 611 enabling the user to visually confirming the image data and the user is capable of visually confirming the image data to be confirmed in the image display portion 611. In the case of the image data for multiple pages, all the pages are displayed in the image display portion 611 with a page feed operation portion 612.

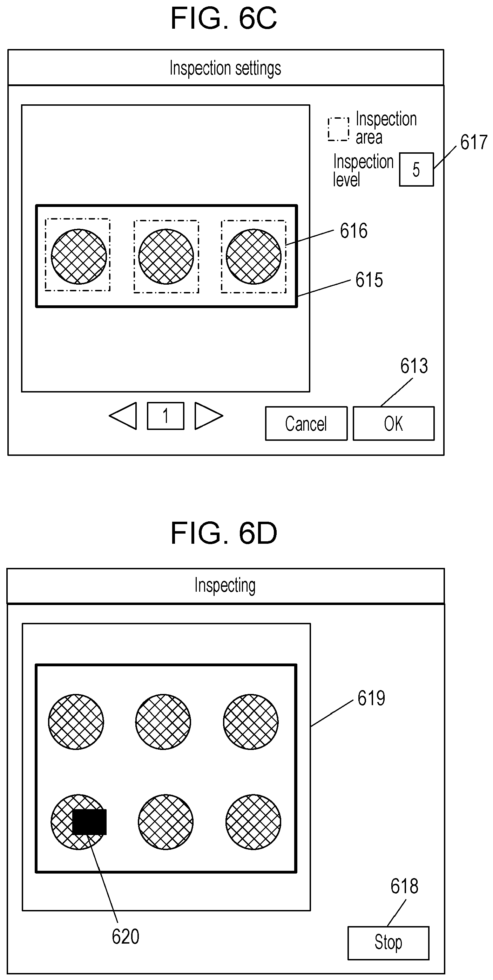

In Step S1007, the CPU 223 in the inspection apparatus 200 performs an inspection registration process 237. Fig. 6C is an example of an inspection registration window. On the inspection registration window, settings of an inspection area setting 616 and Inspection level 617 are accepted while the images are being displayed in an image display portion 615. Although the image to be displayed here is described to be the image generated in Step S1006, the image to be displayed here is not limited to this.

Inspection settings may be made on a sample group image generated through image combining in Step S1008 described below. Finer failures (dust or damages) are capable of being inspected as the higher inspection level is adopted. Upon acceptance of depression of an OK button 613, the CPU 223 in the inspection apparatus 200 stores the location indicated by the inspection area setting 616 and the setting value of the Inspection level 617 in the storage 222 and, then, goes to Step S1008.

In Step S1008, the CPU 223 in the inspection apparatus 200 performs a sample group image generation process 239. Specifically, the CPU 223 in the inspection apparatus 200 generates the sample image of a size corresponding to the number-of-pages M of the non-final group and the sample image of a size corresponding to the number-of-pages N of the final group, which are determined in Step S1005.

In the first embodiment, the sample group image is referred to as a second image and is an image resulting from image combining so that the multiple first images are continuously arranged based on the image received in Step S1004. The sample group image generation process 239 will be described in detail below.

In Step S1009, the CPU 223 in the inspection apparatus 200 generates the print sample image and an inspection settings file of the non-final group and the print sample image and the inspection settings file of the final group through the above steps and stores the print sample images and the inspection settings files in the storage 222. Determination of inspection group

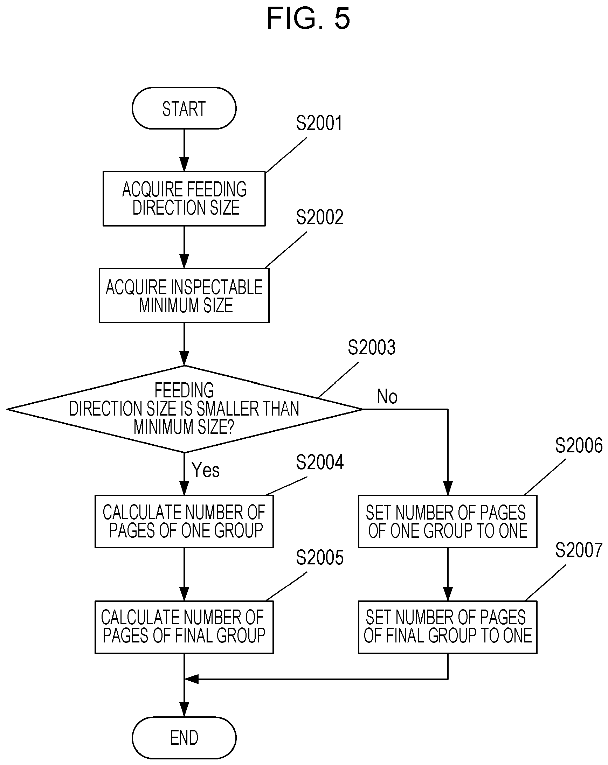

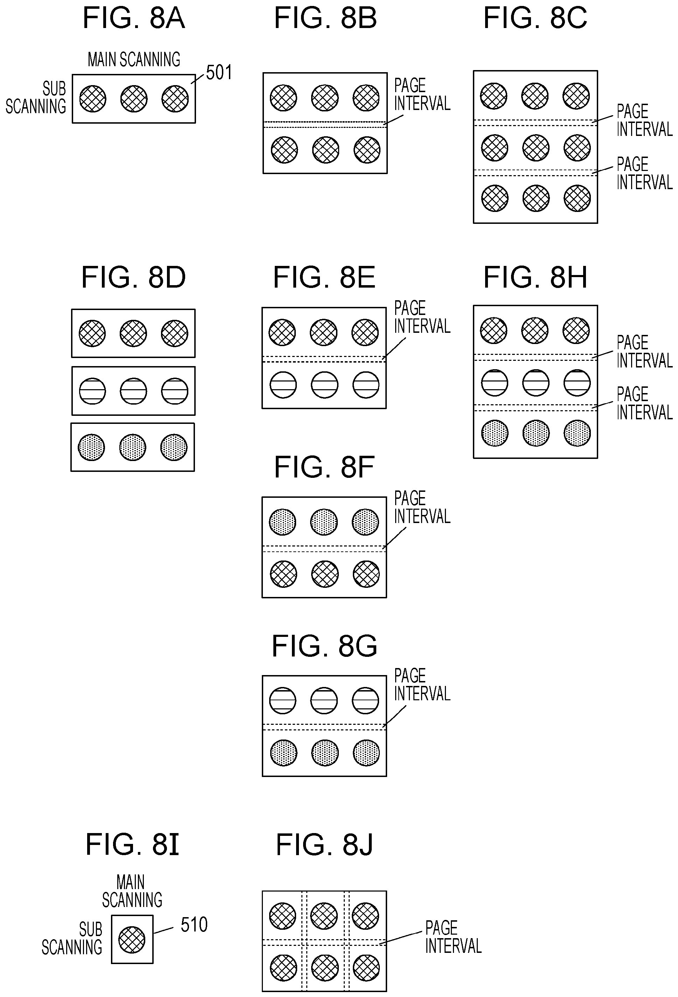

The inspection group determination process 238 performed by the CPU 223 in Step S1005 will now be described with reference to a flowchart in Fig. 5. Schematic diagrams of the sample images in Fig. 8A, Fig. 8B, and Fig. 8C are also used in the description for complement. Fig. 8A is a RIP image generated in Step S1003. Fig. 8B is the print sample image of the non-final page. Fig. 8C is the print sample image of the final page.

Referring to Fig. 5, in Step S2001, the CPU 223 in the inspection apparatus 200 acquires a feeding direction size (a sub scanning size) per page. The sub scanning size results from addition of the page interval in printing to the sub scanning size of the image acquired in Step S1004. A reference number 501 in Fig. 8A is a RIP image and the vertical-direction size of the RIP image is the sub scanning size thereof. The page interval is the distance between the pages in the feeding direction of the image printed on the recording paper in printing and is the value of the Page interval 607 arranged on the print settings window in Fig. 6A, the inputs into which are accepted in Step S1001. When detection marks called eye marks are added to the images corresponding to one page in printing, the value between the eye marks may be set as the page interval. Here, the eye marks are marks used as trigger signals when the pattern in a defect inspection is separated.

In Step S2002, the CPU 223 in the inspection apparatus 200 acquires an inspectable minimum size as a known value from the storage 222. The inspectable minimum size is a value specific to the inspection apparatus and is determined by the CPU 223 and the GPU 227, which are used in the inspection, and the print speed of the print apparatus 100. For example, when the print speed is close to the speed of a normal printer (400 mm/sec), the inspectable minimum size is frequently set to 150 mm.

In Step S2003, the CPU 223 in the inspection apparatus 200 compares the feeding direction size acquired in Step S2001 with the minimum size acquired in Step S2002. If the feeding direction size is smaller than the minimum size (YES in Step S2003), the CPU 223 determines that it is necessary to collectively inspect the multiple pages and goes to Step S2004. If the feeding direction size is greater than or equal to the minimum size (NO in Step S2003), the CPU 223 determines that it is not necessary to collectively inspect the multiple pages and goes to Step S2006. In the first embodiment, whether the size of the image to be inspected is smaller than the inspectable minimum size acquired in Step S2002 is defined as a predetermined condition.

In Step S2004, the CPU 223 in the inspection apparatus 200 calculates the number of pages of one group for which the inspection is collectively performed (the number of pages of group inspection of the non-final group). Fig. 8B is a schematic diagram when the number of pages of group inspection is two. A specific computation expression is as follows:

Formula 1

$$M=roundup(Hmin \div H)$$

roundup: A functional symbol of round-up of decimal point
Hmin: Inspectable feeding-direction minimum size
H: Feeding direction size of one page
M: Number of pages of group inspection of non-final group

In Step S2005, the CPU 223 in the inspection apparatus 200 calculates the number of pages of the final group for which the inspection is collectively performed (the number of pages of group inspection of the final group). Fig. 8C is a schematic diagram when the number of pages of group inspection of the final group is three. A specific computation expression is as follows:

Formula 2

$$N=M+(P \times Q)\%M$$

M: Number of pages per group
P: Number of pages per print (is equal to number of RIP images)
Q: Number of prints to be printed
%: Symbol of operation of division
N: Number of pages of group inspection of final group

If the CPU 223 in the inspection apparatus 200 determines that it is not necessary to collectively inspect the multiple pages (No in Step S2003), in Step S2006, the CPU 223 in the inspection apparatus 200 sets the number of pages of group inspection of the non-final group to one. In Step S2007, the CPU 223 in the inspection apparatus 200 sets the number of pages of group inspection of the final group to one.

The number-of-pages M of group inspection of the non-final group and the number-of-pages N of group inspection of the final group are determined in Step S1005 in the above manner.

Generation of sample group image

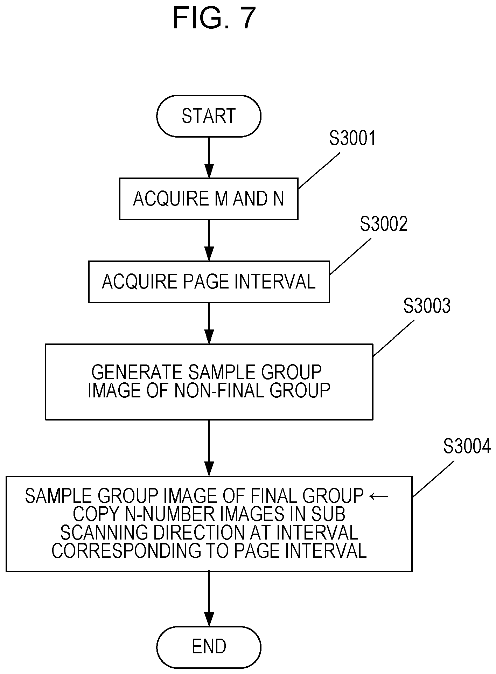

The sample group image generation process 239 performed by the CPU 223 in Step S1008 will now be described with reference to a flowchart in Fig. 7. Schematic diagrams of the sample images in Fig. 8A to Fig. 8H are used in the description for complement.

Referring to Fig. 7, in Step S3001, the CPU 223 in the inspection apparatus 200 acquires the number-of-pages M of group inspection of the non-final group and the number-of-pages N of group inspection of the final group, which are determined in Step S1005.

In Step S3002, the CPU 223 in the inspection apparatus 200 acquires the page interval. The page interval is the distance between the pages in the feeding direction of the image printed on the recording paper in printing and is the value of the Page interval 607 arranged on the print settings window in Fig. 6A, the inputs into which are accepted in Step S1001. In the first embodiment, the page interval may be called the size of the image to be inspected.

In Step S3003, the CPU 223 in the inspection apparatus 200 generates the sample group image of the non-final group. A method of copying the variable M-number pieces of image data in the sub scanning direction on the memory is adopted. In the copying, the page interval is sandwiched between the pages. Fig. 8A is the RIP image. Fig. 8B is the sample group image generated in Step S3003. In Fig. 8B, M is set to two (M=2) and the sample group image is generated using the two RIP images.

Fig. 8D is an example of the RIP images corresponding to three pages. Fig. 8E, Fig. 8F, and Fig. 8G are sample group images generated in Step S3003. When the RIP images corresponding to multiple pages are to be inspected, it is necessary to generate the multiple sample group images for combination. In addition, it is necessary to sequentially use Fig. 8E, Fig. 8F, and Fig. 8G as the sample group images in the inspection.

In Step S3004, the CPU 223 in the inspection apparatus 200 generates the sample group image of the final group. A method of copying the variable N-number pieces of image data in the sub scanning direction on the memory is adopted. In the copying, the page interval is sandwiched between the pages. Fig. 8A is the RIP image. Fig. 8C is the sample group image generated in Step S3004. In Fig. 8C, N is set to three (N=3) and the sample group image is generated using the three RIP images. Fig. 8D is the RIP images corresponding to three pages. Fig. 8H is the sample group image generated in Step S3003. In Fig. 8H, N is set to three (N=3) and the sample group image is generated using the three RIP images.

The sample group image is generated in Step S1008 in the above manner. Inspection

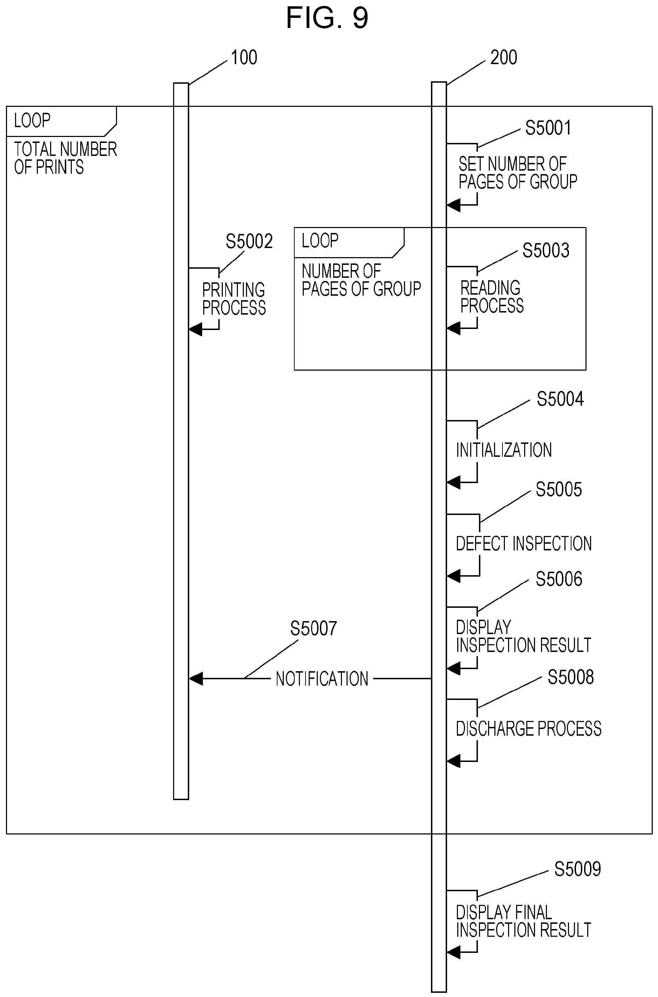

An inspection process will now be described with reference to Fig. 9.

When the processing to Step S1009 is terminated and inspection preparation is finished, the processing from Step S5001 in Fig. 9 is started. In Step S5001, the CPU 223 in the inspection apparatus 200 determines whether the group to be printed is the final group. The CPU 223 in the inspection apparatus 200 sets M as the number of pages of the group if the group to be printed is the non-final group, and sets N as the number of pages of the group if the group to be printed is the final group. The variables M and N are the values determined in Step S1005.

In Step S5002, the CPU 122 in the print apparatus 100 performs a printing process 131.

In the printing process 131, the RIP image generated in a storage area in Step S1003 is read out to perform the printing process 131 for the read-out RIP image. In the printing process 131, after the halftone process or the like of the four-color RIP images (CMYK) is performed using the image processor 125, the images are formed in the respective image formation stations 105 to 108 in accordance with the signal value. In addition, the recording paper is conveyed immediately below the respective stations for transfer.

After the images are transferred to the recording paper, the toner or the ink is fixed to the recording paper with the fixing system 109. Then, the recording paper is conveyed immediately below the reading sensor (image sensor) 201 in the inspection apparatus 200.

In Step S5003, the CPU 223 in the inspection apparatus 200 performs a reading process 232 to read the image on the recording paper printed in Step S5002 of a size corresponding to one page in the feeding direction with the reading sensor 201.

Although the reading of the image of the size corresponding to one page in the feeding direction is repeated the number of times corresponding to the number of pages of the group in Step S5003 in the first embodiment, Step S5003 is not limited to this. For example, the roll paper may be continuously scanned regardless of the sheet size or may be read in units of sizes corresponding to the number of pages of the group.

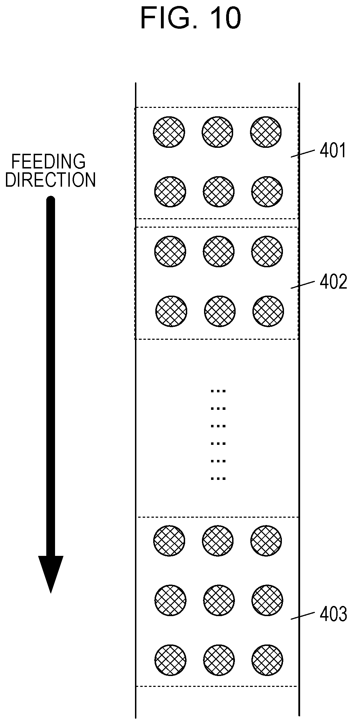

Since one inspection is performed for the multiple pages in the present disclosure, the group to be inspected is determined in Step S1005. Accordingly, the printing process (Step S5002) and the reading process (Step S5003) for one group are repeatedly performed to continuously accumulate the images of the multiple pages in the memory 224. Fig. 10 illustrates how images are read in Step S5003. Fig. 10 illustrates read images that are accumulated in the memory 224 while being read by the reading sensor 201. Referring to Fig. 10, reference numbers 401 and 402 are read images corresponding to the size of the image of the non-final group. When M=2, the image of the two pages in the feeding direction (the sub scanning direction) is cut out along a broken line to acquire the image. A reference number 403 is a read image corresponding to the size of the image of the final group. When N=3, the image of the three pages is accumulated in the memory 224 while being read. The images 401 to 403 are used as inspection images for inspection.

In Step S5004, the CPU 223 in the inspection apparatus 200 performs initial setup. In the initial setup, processing resources (arithmetic thread in the GPU 227, transfer of the image data, the memory, and so on) used for the inspection are acquired. The initial setup is a process that takes a certain time in switching of the image to be inspected regardless of the image size.

In Step S5005, the CPU 223 in the inspection apparatus 200 performs a defect inspection 233.

In the defect inspection, the sample group image acquired in Step S1008 is compared with the inspection images, such as the images 401 to 403, acquired in Step S5003 to identify a defect. For example, the sample group image in Fig. 8B is compared with the inspection image, such as the scanned image in Fig. 10, to determine that a defect is found if there is a difference between the sample group image and the inspection image.

In Step S5006, the CPU 223 in the inspection apparatus 200 displays the inspection result of the inspection image that is being inspected in the operation unit 226. Fig. 6D is a window on which the inspection result is displayed. Referring to Fig. 6D, a reference number 619 illustrates a group of the inspection images that are being inspected. A defect portion 620 found in Step S5005 is superimposed on the group of the inspection images that are being inspected so as to be noticeable. Upon acceptance of depression of a Stop button 618, the CPU 223 in the inspection apparatus 200 transmits an emergency stop command to the CPU 122 in the print apparatus 100. The CPU 122 in the print apparatus 100 is capable of issuing an instruction to the print processor 126 upon acceptance of the emergency stop command to stop the printing.

In Step S5007, the CPU 223 in the inspection apparatus 200 notifies the print apparatus 100 of the inspection result of one group. For example, if defect portions of a predetermined number or more are found, any failure possibly occurs in the image formation stations 105 to 108. For such determination, it is necessary to constantly share the inspection result between the inspection apparatus 200 and the print apparatus 100.

In Step S5008, the CPU 223 in the inspection apparatus 200 performs a discharge process. At this time, the marking unit 202 may be mounted, which adds a mark to the portion that is determined to have any defect in the defect inspection in Step S5005, for example, the position of the defect portion 620 in Fig. 6D.

The CPU 223 in the inspection apparatus 200 repeats Steps S5001 to S5008 the number of times corresponding to the number of prints.

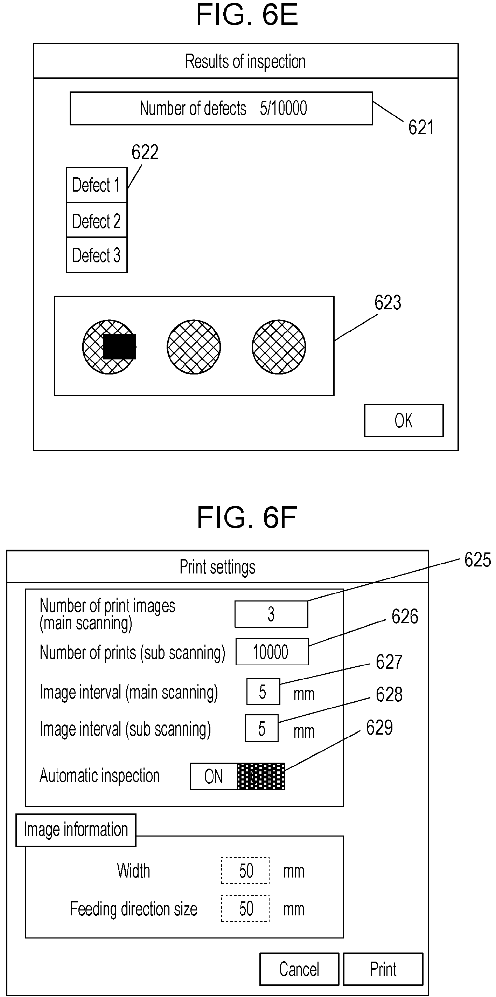

In Step S5009, the CPU 223 in the inspection apparatus 200 displays a final inspection result in the operation unit 226. Fig. 6E illustrates an example of a window of the final inspection result. A number-of-defects 621 in all the print pages, a defect list 622, and an image 623 of an inspection image including a defect are displayed on the window in Fig. 6E. The image of the inspection image is processed so as not to display the group image but to display the image of one page including a defect. The image of the inspection image may be processed so as to display the group image.

Since the initial settings (acquisition of the storage area, transfer of the image data, acquisition of parallel arithmetic thread, and so on) of a defect inspection program are not reduced even if the image size is small in the inspection, the inspection time is made longer than a conveyance time. In addition, it is necessary to perform the initial setup for each inspection and delays in the inspection are accumulated. With the configuration of the first embodiment in which the inspection images are collectively inspected, the inspection time is shorter than a print conveyance time even in the inspection of the print of a small size to enable real-time inspection.

Second embodiment

In a second embodiment, the number of the kinds of the print sample images of multiple pages is decreased in the inspection group determination process 238 described in the first embodiment. A description of the same steps as in the first embodiment is appropriately omitted herein.

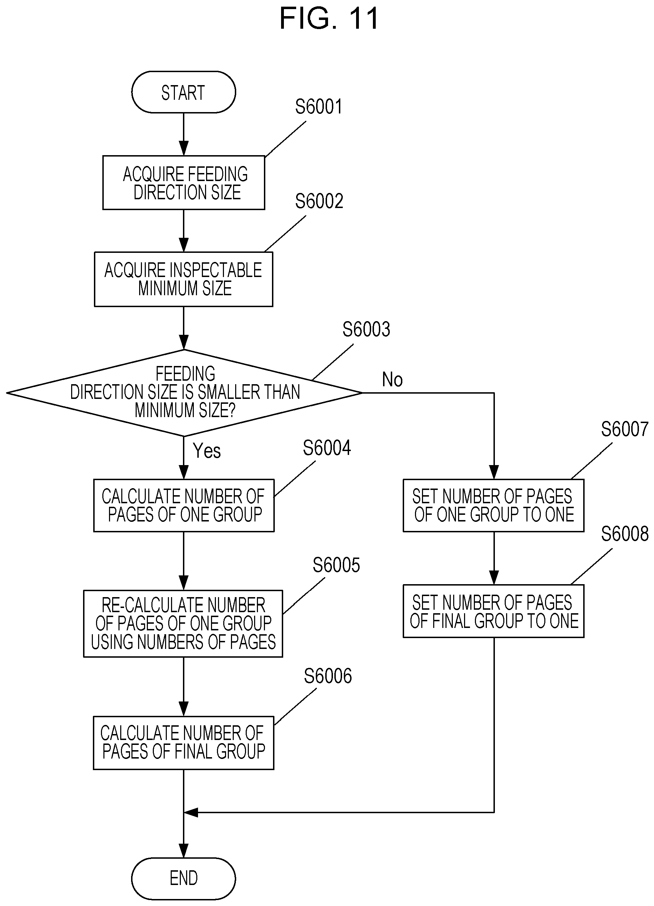

The second embodiment will now be described with reference to a flowchart in Fig. 11. Since Steps S6001 to S6004 in Fig. 11 is the same as Steps S2001 to S2004 in Fig. 5, a detailed description of Steps S6001 to S6004 is omitted herein.

Referring to Fig. 11, in Step S6005, the CPU 223 in the inspection apparatus 200 performs re-calculation so that the number of pages of one group is a multiple the number of the RIP images using the number of pages of one group calculated in Step S6004 and the number of the RIP images. For example, in the example in Fig. 8D, when the result of Step S6004 is two, the number of pages of one group is modified to three, which is a multiple of the number of the RIP images. As a result, it is not necessary to prepare the three kinds of the print sample images, unlike Fig. 8E, Fig. 8F, and Fig. 8G, and it is sufficient to prepare one kind of the print sample image in Fig. 8H. A general computation expression is as follows:

Formula 3

$$M'=\mathrm{roundup}(M \div P) \times P$$

roundup: A functional symbol of round-up of decimal point
P: Number of RIP images
M: Number of pages of group inspection of non-final group (refer to Formula 1 in first embodiment)
M': Number of pages of group inspection of non-final group, which is adjusted so as to be a multiple of number of RIP images

Since Steps S6006 to S6008 are the same as Steps S2005 to S2007 in Fig. 5, a detailed description of Steps S6006 to S6008 is omitted herein.

Through the processing described above, for example, when the RIP images corresponding to three pages illustrated in Fig. 8D is to be printed, it is not necessary to generate the sample images of three kinds, such as the ones in Fig. 8E, Fig. 8F, and Fig. 8G, which are to be generated using the result calculated according to Formula 1 in the first embodiment. In other words, it is sufficient to generate the sample image of one kind in Fig. 8H and this contributes to saving of the memory and the processing resources.

As described above, through the processing in the second embodiment, it is possible to decrease the number of the kinds of the sample images to make the inspection time shorter than the print conveyance time even in the print of multiple pages, thus enabling the real-time inspection.

### Third embodiment

In a third embodiment, a case is described in which the RIP image generated in Step S1003 is small in the main scanning direction with respect to the size of the sheet and the multiple RIP images are arranged in the main scanning direction for printing. A description of the same steps as in the first embodiment is appropriately omitted herein.

### Registration of sample image

Since the registration sequence of the sample image in the third embodiment is the same as the sequence in Fig. 4 used in the description of the first embodiment, a description of the registration sequence of the sample image in the third embodiment is omitted herein. However, the example of the window in the third embodiment is different from the example of the window described above with reference to Fig. 6A in the first embodiment.

Fig. 6F illustrates an example of a window displayed in the operation unit 305 in the PC 300 in the third embodiment, which is described in Step S1001 in the first embodiment. In the window in Fig. 6F, the settings of Number of print images (main scanning) 625, Number of prints (sub scanning) 626, Image interval (main scanning) 627, Image interval (sub scanning) 628, and Automatic inspection switch 629 are capable of being made.

### Determination of inspection group

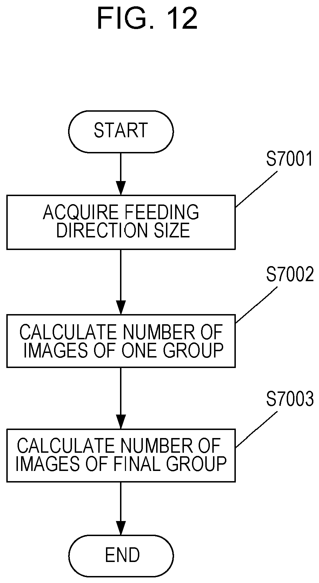

The inspection group determination process 238 in Step S1005 will now be described with reference to a flowchart in Fig. 12.

Referring to Fig. 12, in Step S7001, the CPU 223 in the inspection apparatus 200 acquires the feeding direction size (the sub scanning size) per image. A reference number 510 in Fig. 8I denotes a RIP image, in which the vertical-direction size of the RIP image is the sub scanning size thereof.

In Step S7002, the CPU 223 in the inspection apparatus 200 calculates the number of images of one group for one inspection (the number of images of group inspection of the non-final group). A specific computation expression is indicated in Formula 4. In Formula 4, the number of inspection images of the inspection group is calculated so as to be a multiple of the number of the images in the main scanning direction. For example, in an example in Fig. 8J, when the number of inspection images in the main scanning direction is three and the result in Step S7002 is four, the number of inspection images of one group is six (M=6).

$$\text{Formula 4}$$

$$M=\text{roundup}(\text{Hmin}\div H)\times D$$

roundup: A functional symbol of round-up of decimal point
Hmin: Inspectable feeding-direction minimum size
H: Feeding direction size of one page
M: Number of images of group inspection of non-final group
D: Number of print images in main scanning direction (625 in Fig. 6F)

In Step S7003, the CPU 223 in the inspection apparatus 200 calculates the number of images of the final group, for which the printing is simultaneously performed (the number of images of group inspection of the final group). A specific computation expression is as follows:

$$\text{Formula 5}$$

$$N=M+(D\times Q)\%M$$

M: Number of images of group inspection of non-final group
D: Number of print images in main scanning direction (625 in Fig. 6F)
Q: Number of prints in sub scanning direction (626 in Fig. 6F)
%: Symbol of operation of division
N: Number of images of group inspection of final group

The number-of-images M of group inspection of the non-final group and the number-of-images N of group inspection of the final group are determined in Step S1005 in the above manner.

Generation of sample group image

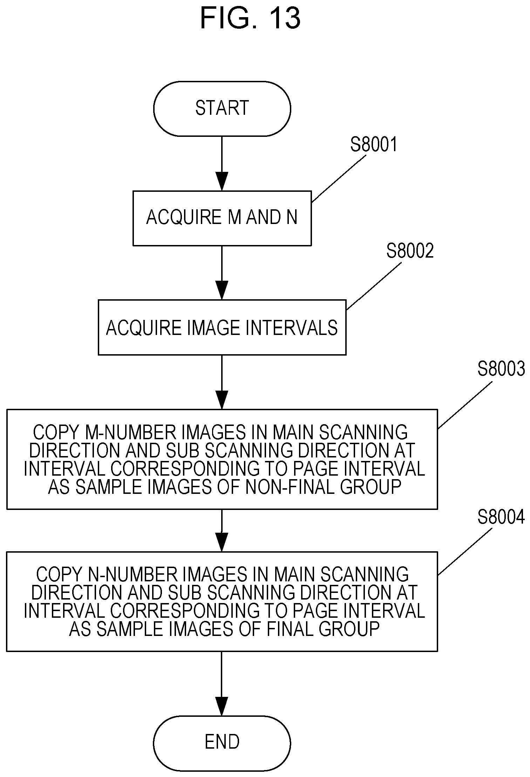

A method of generating the sample group image in Step S1008 will now be described with reference to a flowchart in Fig. 13.

Referring to Fig. 13, in Step S8001, the CPU 223 in the inspection apparatus 200 acquires the variables M and N acquired in Step S1005 in the third embodiment.

In Step S8002, the CPU 223 in the inspection apparatus 200 acquires the Image interval (main scanning) 627 and the Image interval (sub scanning) 628.

In Step S8003, the CPU 223 in the inspection apparatus 200 copies the M-number images in the main scanning direction and the sub scanning direction at the image intervals acquired in Step S8002 as the sample images of the non-final group. Fig. 8I illustrates the RIP image. The sample images arranged in the main scanning direction and the sub scanning direction are generated, as illustrated in Fig. 8J, in Step S8003.

In Step S8004, the CPU 223 in the inspection apparatus 200 copies the N-number images in the main scanning direction and the sub scanning direction at the image intervals acquired in Step S8002 as the sample images of the final group.

As described above, through the processing in the third embodiment, the inspection time is made shorter than the print conveyance time even when the multiple images are arranged in the main scanning direction and the sub scanning direction for printing to enable the real-time inspection.

Other embodiments

Although the various examples and the embodiments of the present disclosure are described above, the scope of the present disclosure are not limited to the specific descriptions of embodiments in the specification.

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited solely to the disclosed embodiments.

**Claims**

1. An inspection apparatus (200) comprising:

   receiving means (221) configured to receive a first image;
   registration means (223) configured to generate a second image in which multiple first images are continuously arranged based on the first image if the received first image meets a predetermined condition to register the second image as a sample image;
   a reader (225) configured to read a read image: and
   inspection means (223) configured to inspect a print based on the sample image and the read image read by the reader from the print resulting from formation of an image on a sheet by image formation means.

2. The inspection apparatus (200) according to Claim 1,
   wherein the second image is an image generated through image combining so that the multiple first images are continuously arranged based on the first image.

3. The inspection apparatus (200) according to Claim 1 or 2,

    wherein the sheet is roll paper, and
    wherein the reader (225) reads the roll paper that is being conveyed by a size of the second image.

4. The inspection apparatus (200) according to any of Claims 1 to 3,
    wherein the predetermined condition is that a size of the first image be smaller than a minimum size that is capable of being inspected by the inspection means in the inspection apparatus (200).

5. The inspection apparatus (200) according to any of Claims 1 to 4,
    wherein the registration means (223) registers the first image as the sample image if the received first image does not meet the predetermined condition.

6. The inspection apparatus (200) according to any of Claims 1 to 5,

    wherein the registration means (223) generates a third image that includes the multiple first images and that is different from the second image based on the first image if the received first image meets the predetermined condition to register the second image and the third image as the sample images, and
    wherein the inspection means (223) inspects the print based in the read image, the second image, and the third image.

7. The inspection apparatus (200) according to Claim 6,
    wherein the third image is registered as the sample image of a final page of the print.

8. The inspection apparatus (200) according to any of Claims 1 to 7, further comprising:

    display control means (223) configured to display a window on a display (226),
    wherein the display control means is configured to display at least one of:

        the first image on an inspection registration window used in inspection of the print by the inspection means;
        the read image read in a size of the second image on a window on which an image that is being inspected is displayed; and
        the read image including a defect found by the inspection means in a size of the first image on a window on which an inspection result by the inspection means is displayed.

9. An inspection system comprising an inspection apparatus according to any one of claims 1 to 8.


**Patentansprüche**

1. Prüfvorrichtung (200), umfassend:

    eine Empfangseinrichtung (221), die konfiguriert ist, ein erstes Bild zu empfangen;
    eine Registrierungseinrichtung (223), die konfiguriert ist, ein zweites Bild, in dem mehrere erste Bilder kontinuierlich angeordnet sind, basierend auf dem ersten Bild zu erzeugen, wenn das empfangene erste Bild eine vorbestimmte Bedingung erfüllt, um das zweite Bild als ein Musterbild zu registrieren;
    eine Leseeinrichtung (225), die konfiguriert ist, ein gelesenes Bild zu lesen; und
    eine Prüfeinrichtung (223), die konfiguriert ist, einen Druck basierend auf dem Musterbild und dem gelesenen Bild zu prüfen, das durch die Leseeinrichtung aus dem Druck gelesen wird, der aus der Erzeugung eines Bildes auf einem Bogen durch eine Bilderzeugungseinrichtung resultiert.

2. Prüfvorrichtung (200) nach Anspruch 1,
    wobei das zweite Bild ein Bild ist, das durch Bildkombination erzeugt wird, so dass die mehreren ersten Bilder basierend auf dem ersten Bild kontinuierlich angeordnet sind.

**3.** Prüfvorrichtung (200) nach Anspruch 1 oder 2,

wobei der Bogen Rollenpapier ist, und
wobei die Leseeinrichtung (225) das Rollenpapier liest, das um die Größe des zweiten Bildes transportiert wird.

**4.** Prüfvorrichtung (200) nach einem der Ansprüche 1 bis 3,
wobei die vorbestimmte Bedingung ist, dass eine Größe des ersten Bildes kleiner als eine Mindestgröße ist, die durch die Prüfeinrichtung in der Prüfvorrichtung (200) geprüft werden kann.

**5.** Prüfvorrichtung (200) nach einem der Ansprüche 1 bis 4,
wobei die Registrierungseinrichtung (223) das erste Bild als das Musterbild registriert, wenn das empfangene erste Bild die vorbestimmte Bedingung nicht erfüllt.

**6.** Prüfvorrichtung (200) nach einem der Ansprüche 1 bis 5,

wobei die Registrierungseinrichtung (223) ein drittes Bild, das die mehreren ersten Bilder enthält und das sich von dem zweiten Bild unterscheidet, basierend auf dem ersten Bild erzeugt, wenn das empfangene erste Bild die vorbestimmte Bedingung erfüllt, um das zweite Bild und das dritte Bild als die Musterbilder zu registrieren, und
wobei die Prüfeinrichtung (223) den Druck basierend auf dem gelesenen Bild, dem zweiten Bild und dem dritten Bild prüft.

**7.** Prüfvorrichtung (200) nach Anspruch 6,
wobei das dritte Bild als das Musterbild einer letzten Seite des Drucks registriert wird.

**8.** Prüfvorrichtung (200) nach einem der Ansprüche 1 bis 7, ferner umfassend:

eine Anzeigesteuereinrichtung (223), die konfiguriert ist, ein Fenster auf einer Anzeige (226) anzuzeigen,
wobei die Anzeigesteuereinrichtung konfiguriert ist, mindestens eines der Folgenden anzuzeigen:

das erste Bild in einem Prüfregistrierungsfenster, das bei der Prüfung des Drucks durch die Prüfeinrichtung verwendet wird;
das gelesene Bild, das in einer Größe des zweiten Bildes gelesen wird, in einem Fenster, in dem ein zu prüfendes Bild angezeigt wird; und
das gelesene Bild, das einen durch die Prüfeinrichtung gefundenen Defekt enthält, in einer Größe des ersten Bildes in einem Fenster, in dem ein Prüfergebnis durch die Prüfeinrichtung angezeigt wird.

**9.** Prüfsystem, das eine Prüfvorrichtung nach einem der Ansprüche 1 bis 8 umfasst.

**Revendications**

**1.** Appareil d'inspection (200) comprenant :

des moyens de réception (221) configurés pour recevoir une première image ;
un moyen d'enregistrement (223) configuré pour générer une deuxième image dans laquelle plusieurs premières images sont agencées en continu sur la base de la première image si la première image reçue remplit une condition prédéterminée pour enregistrer la deuxième image en tant qu'image échantillon ;
un lecteur (225) configuré pour lire une image lue ; et
des moyens d'inspection (223) configurés pour inspecter une impression sur la base de l'image échantillon et de l'image lue par le lecteur à partir de l'impression résultant de la formation d'une image sur une feuille par des moyens de formation d'image.

**2.** Appareil d'inspection (200) selon la revendication 1, dans lequel la deuxième image est une image générée par une combinaison d'images de sorte que les multiples premières images soient agencées en continu sur la base de la première image.

**3.** Appareil d'inspection (200) selon la revendication 1 ou 2,

dans lequel la feuille est un rouleau de papier, et
dans lequel le lecteur (225) lit le rouleau de papier qui est transporté par une taille de la deuxième image.

4. Appareil d'inspection (200) selon l'une quelconque des revendications 1 à 3,
dans lequel la condition prédéterminée est qu'une taille de la première image soit inférieure à une taille minimale qui est apte à être inspectée par les moyens d'inspection dans l'appareil d'inspection (200).

5. Appareil d'inspection (200) selon l'une quelconque des revendications 1 à 4,
dans lequel les moyens d'enregistrement (223) enregistrent la première image en tant qu'image échantillon si la première image reçue ne remplit pas la condition prédéterminée.

6. Appareil d'inspection (200) selon l'une quelconque des revendications 1 à 5,

dans lequel les moyens d'enregistrement (223) génèrent une troisième image qui inclut les multiples premières images et qui est différente de la deuxième image sur la base de la première image si la première image reçue remplit la condition prédéterminée pour enregistrer la deuxième image et la troisième image en tant qu'images échantillons, et
dans lequel les moyens d'inspection (223) inspectent l'impression sur la base de l'image lue, de la deuxième image et de la troisième image.

7. Appareil d'inspection (200) selon la revendication 6, dans lequel la troisième image est enregistrée en tant qu'image échantillon d'une page finale de l'impression.

8. Appareil d'inspection (200) selon l'une quelconque des revendications 1 à 7, comprenant en outre :

des moyens de commande d'affichage (223) configurés pour afficher une fenêtre sur un dispositif d'affichage (226),
dans lequel les moyens de commande d'affichage sont configurés pour afficher au moins l'une parmi :

la première image sur une fenêtre d'enregistrement d'inspection utilisée pour l'inspection de l'impression par les moyens d'inspection ;
l'image lue dans une taille de la deuxième image sur une fenêtre sur laquelle une image qui est inspectée est affichée ; et
l'image lue incluant un défaut trouvé par les moyens d'inspection dans une taille de la première image sur une fenêtre sur laquelle est affiché un résultat d'inspection par les moyens d'inspection.

9. Système d'inspection comprenant un appareil d'inspection selon l'une quelconque des revendications 1 à 8.

# FIG. 1

## FIG. 2

400

**INSPECTION APPARATUS**

- NETWORK CONTROLLER — 221
- STORAGE — 222
- CPU — 223
- MEMORY — 224
- READER — 225
- OPERATION UNIT — 226
- GPU — 227

200

**PRINT APPARATUS**

- NETWORK CONTROLLER — 120
- STORAGE — 121
- CPU — 122
- MEMORY — 123
- OPERATION UNIT — 124
- IMAGE PROCESSOR — 125
- PRINT PROCESSOR — 126
- GPU

100

**PC**

- NETWORK CONTROLLER — 301
- STORAGE — 302
- CPU — 303
- MEMORY — 304
- OPERATION UNIT — 305

300

# FIG. 3A

100

PROGRAMS IN STORAGE 121

130
RIP PROCESS

131
PRINTING PROCESS

# FIG. 3B

200

PROGRAMS IN STORAGE 222

SAMPLE REGISTRATION

236
SAMPLE IMAGE GENERATION

237
INSPECTION REGISTRATION

238
INSPECTION GROUP DETERMINATION

239
SAMPLE GROUP IMAGE GENERATION

INSPECTION

233
DEFECT INSPECTION

READING PROCESS
232

MARKING PROCESS

# FIG. 3C

300

PROGRAMS IN STORAGE 302

PRINT SETTING

310
PRINT DATA GENERATION

# FIG. 4

# FIG. 5

# FIG. 6A

Print settings — 608

Number of prints    10000 — 607

Page interval    5    mm

Automatic inspection    ON — 606

Image information

Width    400    mm — 605

Feeding direction size    50    mm — 604

Number of pages    1 — 603

Cancel    Print

# FIG. 6B

Registration of sample image

611

610    609

612    1    Cancel    OK

# FIG. 6C

Inspection settings

Inspection area

Inspection level  5  — 617

— 616

— 615

— 613

◁  1  ▷          Cancel    OK

# FIG. 6D

Inspecting

— 619

— 618

620          Stop

# FIG. 6E

Results of inspection

Number of defects   5/10000

621

622

Defect 1

Defect 2

Defect 3

623

OK

# FIG. 6F

Print settings

625

| Number of print images (main scanning) | 3 | |
| Number of prints (sub scanning) | 10000 | |
| Image interval (main scanning) | 5 | mm |
| Image interval (sub scanning) | 5 | mm |
| Automatic inspection | ON | |

626

627

628

629

Image information

| Width | 50 | mm |
| Feeding direction size | 50 | mm |

Cancel    Print

# FIG. 7

START

ACQUIRE M AND N — S3001

ACQUIRE PAGE INTERVAL — S3002

GENERATE SAMPLE GROUP
IMAGE OF NON-FINAL GROUP — S3003

SAMPLE GROUP IMAGE OF FINAL GROUP ←
COPY N-NUMBER IMAGES IN SUB
SCANNING DIRECTION AT INTERVAL
CORRESPONDING TO PAGE INTERVAL — S3004

END

# FIG. 8A

SUB SCANNING

MAIN SCANNING

501

# FIG. 8B

PAGE INTERVAL

# FIG. 8C

PAGE INTERVAL

PAGE INTERVAL

# FIG. 8D

# FIG. 8E

PAGE INTERVAL

# FIG. 8H

PAGE INTERVAL

PAGE INTERVAL

# FIG. 8F

PAGE INTERVAL

# FIG. 8G

PAGE INTERVAL

# FIG. 8I

MAIN SCANNING

SUB SCANNING

510

# FIG. 8J

PAGE INTERVAL

24

# FIG. 9

100

200

LOOP

TOTAL NUMBER
OF PRINTS

S5001

SET NUMBER OF
PAGES OF GROUP

S5002

PRINTING
PROCESS

LOOP

NUMBER OF
PAGES OF GROUP

S5003

READING
PROCESS

S5004

INITIALIZATION

S5005

DEFECT INSPECTION

S5006

DISPLAY
INSPECTION RESULT

S5007

NOTIFICATION

S5008

DISCHARGE PROCESS

S5009

DISPLAY FINAL
INSPECTION RESULT

# FIG. 10

FEEDING
DIRECTION

401

402

...
...
...
...
...
...

403

# FIG. 11

```
                    START
                      │
                      ▼                    S6001
         ┌─────────────────────────┐
         │   ACQUIRE FEEDING       │
         │   DIRECTION SIZE        │
         └─────────────────────────┘
                      │              S6002
                      ▼
         ┌─────────────────────────┐
         │  ACQUIRE INSPECTABLE     │
         │   MINIMUM SIZE           │
         └─────────────────────────┘
                      │                          S6003
                      ▼
              ╱───────────────╲
             ╱    FEEDING       ╲         No
         ◄──╱ DIRECTION SIZE IS SMALLER THAN ╲──────────────┐
             ╲  MINIMUM SIZE?   ╱                            │
              ╲───────────────╱                              │
                      │ Yes          S6004                    │
                      ▼                              S6007     ▼
         ┌─────────────────────────┐      ┌─────────────────────────┐
         │  CALCULATE NUMBER OF     │      │   SET NUMBER OF PAGES    │
         │  PAGES OF ONE GROUP      │      │  OF ONE GROUP TO ONE     │
         └─────────────────────────┘      └─────────────────────────┘
                      │              S6005                    │       S6008
                      ▼                                       ▼
         ┌─────────────────────────┐      ┌─────────────────────────┐
         │  RE-CALCULATE NUMBER     │      │   SET NUMBER OF PAGES    │
         │  OF PAGES OF ONE GROUP   │      │  OF FINAL GROUP TO ONE   │
         │  USING NUMBERS OF PAGES  │      └─────────────────────────┘
         └─────────────────────────┘                         │
                      │              S6006                    │
                      ▼                                       │
         ┌─────────────────────────┐                         │
         │  CALCULATE NUMBER OF     │                         │
         │  PAGES OF FINAL GROUP    │                         │
         └─────────────────────────┘                         │
                      │                                       │
                      ▼◄──────────────────────────────────────┘
                    END
```

# FIG. 12

```
         ┌──────────┐
         │  START   │
         └────┬─────┘
              │
              ▼                          S7001
    ┌─────────────────────┐
    │  ACQUIRE FEEDING    │
    │  DIRECTION SIZE     │
    └─────────┬───────────┘
              │
              ▼                          S7002
    ┌─────────────────────┐
    │ CALCULATE NUMBER OF │
    │ IMAGES OF ONE GROUP │
    └─────────┬───────────┘
              │
              ▼                          S7003
    ┌─────────────────────┐
    │ CALCULATE NUMBER OF │
    │IMAGES OF FINAL GROUP│
    └─────────┬───────────┘
              │
              ▼
         ┌──────────┐
         │   END    │
         └──────────┘
```

# FIG. 13

START

S8001

ACQUIRE M AND N

S8002

ACQUIRE IMAGE INTERVALS

S8003

COPY M-NUMBER IMAGES IN MAIN SCANNING DIRECTION AND SUB SCANNING DIRECTION AT INTERVAL CORRESPONDING TO PAGE INTERVAL AS SAMPLE IMAGES OF NON-FINAL GROUP

S8004

COPY N-NUMBER IMAGES IN MAIN SCANNING DIRECTION AND SUB SCANNING DIRECTION AT INTERVAL CORRESPONDING TO PAGE INTERVAL AS SAMPLE IMAGES OF FINAL GROUP

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011158421 A